# EUROPÄISCHE PATENTSCHRIFT

(11) **EP 2 759 719 B1**
(45) Veröffentlichungstag und Bekanntmachung des Hinweises auf die Patenterteilung: **21.11.2018**
(21) Anmeldenummer: 14151354.9
(22) Anmeldetag: 16.01.2014
(51) Int. Cl.: F16B 21/08, F16L 3/04, F16B 15/00, F24D 3/14, F16B 5/12

(54) **Halter zum Fixieren von Rohren auf einer Unterlage**
Holder for mounting pipes on a support
Support pour la fixation de tuyaux sur une sous-structure

(30) Priorität: 29.01.2013 DE 202013000852 U
(43) Veröffentlichungstag der Anmeldung: 30.07.2014
(73) Patentinhaber: KERMI GmbH, 94447 Plattling (DE)
(72) Erfinder: Eberl, Markus, 94563 Otzing (DE)
(74) Vertreter: Patentanwälte Bressel und Partner mbB

(56) Entgegenhaltungen:
- DE-A1-102011 013 292
- FR-A1- 2 971 032

## Beschreibung

Die Erfindung betrifft einen Halter zum Fixieren von Rohren auf einer Unterlage, die eine Dämmung und eine Folie umfasst, zur Verlegung von rohrförmigen Gegenständen, insbesondere von Flächenheizungsrohren, nach dem Oberbegriff des Anspruchs 1, wobei der Halter u-förmig ausgebildet ist und einen zwei Schenkel verbindenden Steg umfasst und die Schenkel innere und äußere Widerhaken aufweisen.

Rohre für Flächenheizungen, insbesondere Fußbodenheizungen, werden auf Wärme isolierenden Unterlagen verlegt, deren Oberfläche noch mit einer Kaschierung versehen ist, auf welchen die Rohre fixiert werden. Für diese Fixierung werden verschiedene Halter verwendet, die meist mit zwei beidseitig des Rohres in die Isolierung einsteckbaren Schenkeln versehen sind, die durch ein das Rohr im montierten Zustand übergreifenden Bogen verbunden sind. Die Schenkel sind mit Widerhaken ausgerüstet, die der Auszugssicherung der Halter aus der Isolierung dienen sollen.

Ein gattungsgemäßer Halter wird in der Druckschrift DE 31 25 318 C2 beschrieben. Als weiterer Stand der Technik werden die Druckschriften DE 41 16 629 A1, DE 101 09 962 A1, DE 78 27 229 U1 und DE 103 31 992 A1 genannt. In der DE 10 2009 009 400 B4 wird ebenfalls ein gattungsgemäßer Halter beschrieben. Die Widerhaken der Halter weisen zumindest abschnittsweise nutförmige Ausnehmungen in Form eines u-förmigen Profils auf. Durch diese Ausgestaltung weist der Widerhaken eine erhöhte Elastizität oder Biegsamkeit auf und zwar in Richtung des zugehörigen Schaftes und nicht in entgegen gesetzter Richtung.

In der FR 2 971 032 A1 wird ein Rohrbefestigungsclip zur Befestigung von Heizleistungen auf Dämmplatten vorgeschlagen. Der Clip ist U-förmig ausgebildet und umfasst zwei Schenkel mit harpunenartigen Spitzen, die über einen bogenförmigen Abschnitt miteinander verbunden sind. Die voin der Harpunenspitze abgehenden äußeren Flügel weisen Rippen auf, die durch Einschnitte quer zum Schaft der Harpune in drei Abschnitte geteilt werden. Die dadurch entstehenden beweglichen Abschnitte erhöhen die Beweglichkeit der Widerhaken.

Bei den bekannten Haltern werden die Widerhaken beim Eindrücken in die Folie nur jeweils in eine Richtung zusammengedrückt. Dabei gleiten die inneren und äußeren Widerhaken durch das gestochene Loch wieder heraus. Speziell bei Rohr-Bogenverlegungen wird der Halter durch das Rohr seitlich stärker belastet. Dadurch wird der Halter verschoben und in der Folie entstehen längliche Löcher. Die Widerhaken können sich dann nicht mehr ausreichend abstützen und gleiten durch die länglich vergrößerten Löcher heraus.

Die Aufgabe der vorliegenden Erfindung besteht darin, die o.g. genannten Nachteile zu überwinden und einen Halter zur Verfügung zu stellen, der einen verbesserten Halt sicherstellt.

Erfindungsgemäß wird diese Aufgabe durch die Merkmale des Anspruchs 1 gelöst. Vorteilhafte Ausgestaltungen der Erfindung sind in den zugehörigen Unteransprüchen enthalten.

Demnach beinhaltet die Erfindung einen Halter zum Fixieren von Rohren auf einer Unterlage, die eine Dämmung und eine Folie umfasst, zur Verlegung von rohrförmigen Gegenständen, insbesondere von Flächenheizungsrohren, wobei der Halter u-förmig ausgebildet ist und einen zwei Schenkel verbindenden Steg umfasst und die Schenkel innere und äußere Widerhaken aufweisen, wobei die inneren und/oder äußeren Widerhaken durch Einschnitte in Widerhakenabschnitte geteilt sind. Die Widerhaken werden dabei durch die Einschnitte zumindest teilweise geteilt, wodurch die Anzahl der Widerhaken vorteilhaft vergrößert wird. Nach einem besonderen Merkmal der Erfindung sind die Einschnitte v-förmig ausgebildet, wobei die sich daraus ergebende Anzahl von Widerhaken in einem Winkel >0° und < 90° zueinander gestellt sind. Vorteilhaft sind die geteilten Widerhakenabschnitte dabei versetzt, vorzugsweise diagonal zueinander gestellt.

Durch die erfindungsgemäße Ausbildung der Halter wird die Haltekraft des Halters zur Fixierung eines Rohres auf einer folienkaschierten Dämmplatte erhöht. Durch die Erhöhung der Anzahl der Widerhaken und die Stellung der Widerhakenabschnitte zueinander wird die Beweglichkeit der Widerhaken bzw. Widerhakenabschnitte in mehrdimensionaler Richtung erhöht. Die Widerhaken wirken in verschiedene Richtungen und verhaken sich mit hoher Sicherheit.

Die Erfindung gibt eine Vielzahl von Möglichkeiten zur Ausgestaltung eines Halters vor. Hierzu wird einerseits auf den Patentanspruch 1 und die nachgeordneten Patentansprüche und andererseits auf die Beschreibung der Ausführungsbeispiele in Verbindung mit der Zeichnung verwiesen. In der Zeichnung zeigen:
- Fig. 1a,b:: eine schematische Darstellung eines Halters nach dem Stand der Technik zur Fixierung eines Rohres in einer Dämmung mit Folie;
- Fig. 2:: eine Variante des erfindungsgemäßen Halters;
- Fig. 3:: eine weitere Variante des erfindungsgemäßen Halters;
- Fig. 4a,b:: weitere Variante des erfindungsgemäßen Halters.

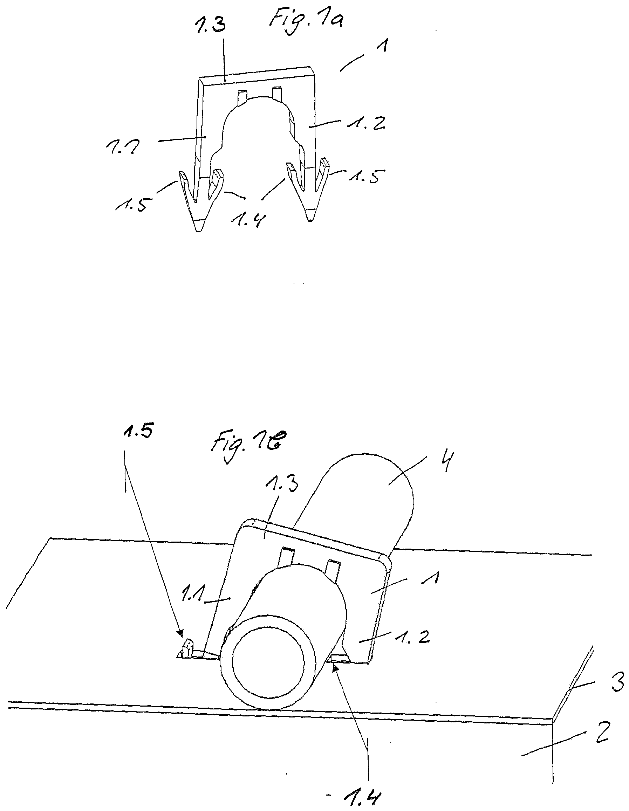

In der Fig.1a und 1b ist ein gattungsgemäßer Halter dargestellt. Der Halter 1 dient zum Fixieren von Flächenheizungsrohren 4 auf einer Unterlage, die eine Dämmung 2 und eine Folie 3 umfasst. Die Folie 3 besteht dabei vorzugsweise aus einem Kunststoff. Der Halter 1 ist u-förmig ausgebildet und umfasst einen zwei Schenkel 1.1, 1.2 verbindenden Steg 1.3. Die Schenkel weisen innere und äußere Widerhaken 1.4, 1.5 auf.

Beim Eindringen in die Dämmung 2 durch die Kunststofffolie 3 werden die inneren und äußeren Widerhaken 1.4, 1.5 zusammen gedrückt. Die Widerhaken spreizen sich und stützen sich unterhalb der Folie 3 ab. Bei Rohrbogenverlegung wirken seitliche Kräfte auf den Halter ein und die Widerhaken können sich nicht an der Folie abstützen (Fig. 1b). Dadurch wird der Halter einseitig belastet und das Folienloch vergrößert sich dadurch. Somit stützen sich nur ein innerer und ein äußerer Widerhaken unter der Folie ab. Die Fixierung ist nicht mehr sicher.

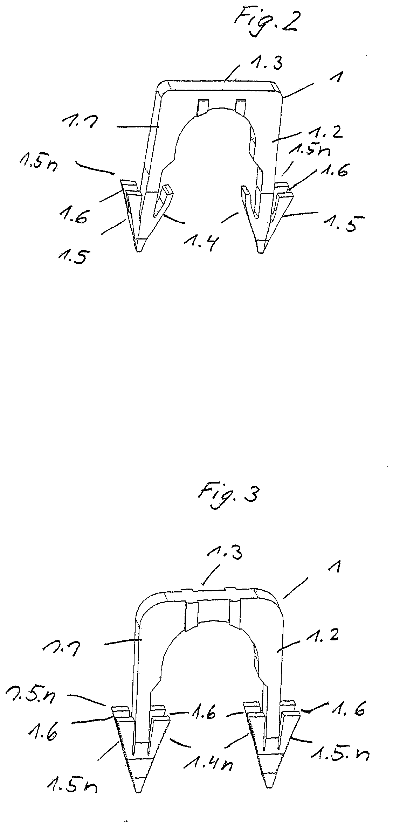

Die Fig. 2 zeigt eine Variante des erfindungsgemäßen Halters. Beim Eindringen in die Dämmung und der Folie werden ebenfalls die äußeren und inneren Widerhaken 1.4, 1.5 zusammengedrückt. Der innere Widerhaken 1.4 wird zusammen gedrückt. Unterschiede ergeben sich bei den äußeren Widerhaken 1.5. Der äußere Widerhaken wurde durch einen v-förmigen Einschnitt 1.6 geteilt, so dass 2 Widerhaken 1.5n sich an der Folie 3 unten abstützen können. Außerdem ragen die Widerhaken 1.5n über die Breite des Halterkörpers 1 hinaus. Somit ist die Gefahr, dass die Widerhaken durch das gestoßene Folienloch heraus gleiten können behoben. Die Widerhaken stützen sich seitlich an der Folie ab. Vorteilhaft ist auch, dass sich die äußeren Widerhaken in verschiedene Richtungen drücken lassen und somit immer seitlich unter der Folie abstützen.

Die Fig. 3 zeigt eine Variante des erfindungsgemäßen Halters 1. Beim Eindringen in die Dämmung 2 und Folie 3 werden die inneren und äußeren Widerhaken 1.4, 1.5 in verschiedene Richtungen zusammengedrückt. Die Widerhaken 1.4, 1.5 wurden jeweils durch einen v-förmigen Einschnitt 1.6 geteilt, so dass acht Widerhaken 1.4n, 1.5n sich an der Folie 3 abstützen können. Außerdem ragen die Widerhaken 1,5n über die Breite des Halterkörpers 1 hinaus. Somit ist die Gefahr, dass die Widerhaken durch das gestoßene Folienloch heraus gleiten können behoben. Die Widerhaken 1.4n, 1.5n stützen sich seitlich an der Folie ab. Vorteilhaft ist auch, dass sich die äußeren Widerhaken in verschiedene Richtungen drücken lassen und somit immer seitlich unter der Folie 3 abstützen.

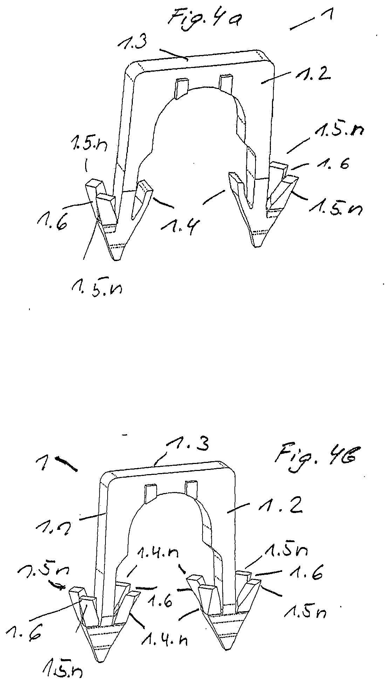

Die Fig. 4a und 4b zeigen eine weitere vorteilhafte Ausbildung der Erfindung, wobei hier die geteilten Widerhakenabschnitte 1.4n, 1.5n versetzt, vorzugsweise diagonal zueinander gestellt sind. Beim Eindringen der äußeren Widerhaken in die Folie gemäß der Ausbildung, wird diese weniger beschädigt (zerstört). Es erfolgt also ein "schonendes" Eindringen der Widerhaken. Anstelle der äußeren Kanten der Widerhaken gleitet die Folie außen an den diagonalen Oberflächen der Widerhaken nach oben und wird somit bei jedem Eindringen in die Folie schonender behandelt. Ein "Einschneiden" der äußeren Kanten in die Folie wird somit verhindert.

## Patentansprüche

1. Halter zum Fixieren von Rohren auf einer Unterlage zur Verlegung von rohrförmigen Gegenständen, insbesondere von Flächenheizungsrohren (4), wobei der Halter (1) u-förmig ausgebildet ist und einen zwei Schenkel (1.1, 1.2) verbindenden Steg (1.3) umfasst und die Schenkel innere und äußere Widerhaken (1.4, 1.5) aufweisen, **dadurch gekennzeichnet, dass** die inneren und/oder äußeren Widerhaken (1.4, 1.5) durch Einschnitte (1.6) in Widerhakenabschnitte (1.4n, 1.5n) geteilt sind, die die Anzahl der Widerhaken gegen die Unterlage vergrößern.

2. Halter nach Anspruch 1, **dadurch gekennzeichnet, dass** die Widerhaken (1.4, 1.5) durch die Einschnitte (1.6) zumindest teilweise geteilt sind.

3. Halter nach den Ansprüchen 1 und 2, **dadurch gekennzeichnet, dass** die Einschnitte (1.6) v-förmig ausgebildet sind und die sich daraus ergebende Anzahl von Widerhaken in einem Winkel >0°und < 90° zueinander gestellt sind.

4. Halter nach den Ansprüchen 1 bis 3, **dadurch gekennzeichnet, dass** die geteilten Widerhakenabschnitte (1.4n, 1.5n) versetzt, vorzugsweise diagonal zueinander gestellt sind.

## Claims

1. Holder for fixing pipes on a support for laying tubular objects, in particular panel heating pipes (4), wherein the holder (1) is of u-shaped design and comprises a web (1.3) which connects two legs (1.1, 1.2), and the legs have inner and outer barbs (1.4, 1.5), **characterized in that** the inner and/or outer barbs (1.4, 1.5) are divided by incisions (1.6) into barb portions (1.4n, 1.5n) which increase the number of the barbs with respect to the support.

2. Holder according to Claim 1, **characterized in that** the barbs (1.4, 1.5) are at least partially divided by the incisions (1.6).

3. Holder according to Claims 1 and 2, **characterized in that** the incisions (1.6) are of v-shaped design and the number of barbs resulting therefrom is set at an angle of >0° and <90° to one another.

4. Holder according to Claims 1 to 3, **characterized in that** the divided barb portions (1.4n, 1.5n) are set in an offset manner, preferably diagonally to one another.

## Revendications

1. Support pour la fixation de tuyaux sur un subjectile destiné à la pose d'objets de forme tubulaire, en particulier de tuyaux de chauffage plats (4), le support (1) étant réalisé en forme de u et comprenant une membrure (1.3) reliant deux branches (1.1, 1.2) et les branches présentant des butées internes et externes (1.4, 1.5), **caractérisé en ce que** les butées internes et/ou externes (1.4, 1.5) sont divisées par des entailles (1.6) en portions de butées (1.4n, 1.5n) qui augmentent le nombre des butées contre le subjectile.

2. Support selon la revendication 1, **caractérisé en ce que** les butées (1.4, 1.5) sont divisées au moins en partie par les entailles (1.6).

3. Support selon les revendications 1 et 2, **caractérisé en ce que** les entailles (1.6) sont réalisées en forme de v et la pluralité de butées en résultant sont inclinées les unes par rapport aux autres suivant un angle > 0° et < 90°.

4. Support selon les revendications 1 à 3, **caractérisé en ce que** les portions de butées divisées (1.4n, 1.5n) sont décalées, de préférence sont placées en diagonale les unes par rapport aux autres.
